**Europäisches Patentamt**

(19) **European Patent Office**

**Office européen des brevets**

(11) Numéro de publication: **0 093 637**
**B1**

(12) FASCICULE DE BREVET EUROPEEN

(45) Date de publication du fascicule du brevet:
12.03.86

(51) Int. Cl.⁴: **B 65 G 65/28**

(21) Numéro de dépôt: **83400780.9**

(22) Date de dépôt: **20.04.83**

(54) Installation de mise en tas et de reprise de matériaux en vrac.

(30) Priorité: **04.05.82 FR 8207699**

(43) Date de publication de la demande:
**09.11.83 Bulletin 83/45**

(45) Mention de la délivrance du brevet:
**12.03.86 Bulletin 86/11**

(84) Etats contractants désignés:
**AT DE GB IT**

(56) Documents cités:
**BE - A - 554 704**
**DE - A - 1 924 915**
**DE - B - 1 292 076**
**DE - C - 625 124**

(73) Titulaire: **FIVES-CAIL BABCOCK, Société anonyme, 7 rue Montalivet, F-75383 Paris Cedex 08 (FR)**

(72) Inventeur: **Grandin, Daniel, 1, rue J.P. Laurens, F-92260 Fontenay-Aux-Roses (FR)**

(74) Mandataire: **Fontanié, Etienne, FIVES-CAIL BABCOCK 7, rue Montalivet, F-75383 Paris Cedex 08 (FR)**

## Description

La présente invention concerne la manutention de matériaux en vrac, notamment sur un parc de stockage.

Elle concerne plus particulièrement une installation de mise en tas et de reprise comprenant un châssis mobile le long d'une voie, une flèche montée sur un support pivotant autour d'un axe vertical dudit châssis, ladite flèche étant inclinable autour d'un axe horizontal dudit support, un organe de reprise monté sur l'extrémité libre de la flèche, un transporteur à bande réversible porté par la flèche, un chariot mobile le long d'un convoyeur à bande disposé suivant la voie du châssis mobile, en vue de déplacer suivant ladite voie une boucle de la bande dudit convoyeur, une structure de support de la boucle, ladite structure étant articulée au chariot, et des moyens permettant de commander le basculement de ladite structure afin de faire passer l'extrémité de la boucle de la position de mise en tas à la position de reprise et vice versa, positions pour lesquelles les sens de circulation du transporteur de flèche et du convoyeur sont inversés.

Des installations de ce genre sont connues depuis longtemps.

Les installations les plus anciennes présentent l'inconvénient de nécessiter un certain nombre d'opérations longues et difficiles chaque fois qu'il est nécessaire de passer d'une position de service à une autre, par exemple de la position de mise en tas à la position de reprise.

Il est indispensable de désolidariser le chariot du châssis mobile auquel il est attelé. Il faut ensuite déplacer le chariot pour l'éloigner du châssis. Lorsque l'éloignement est suffisant, il devient possible de faire basculer la structure de support de la boucle sans que ladite boucle ne vienne heurter le moindre obstacle solidaire du châssis, et notamment la flèche. Ce basculement est généralement commandé au moyen d'un treuil solidaire du chariot. Le basculement effectué, il faut déplacer à nouveau le chariot pour le rapprocher du châssis en vue de le réatteler à ce dernier.

Ces différentes opérations demandent un certain temps, ce qui rend l'exploitation non seulement difficile mais aussi particulièrement coûteuse.

Pour éviter ces inconvénients, on a déjà proposé d'adapter sur le châssis mobile un mécanisme d'écartement du transporteur de flèche agissant pendant la période de basculement de la structure de support de la boucle, ce basculement étant commandé comme précédemment indiqué.

On est alors conduit à prévoir un mécanisme compliqué et onéreux.

Suivant une autre solution décrite dans le document DE-B N° 1292076, l'installation comprend un châssis mobile le long d'une voie, un chariot mobile le long d'un convoyeur à bande réversible disposé suivant la voie du châssis mobile afin de déplacer sur ladite voie une boucle de la bande dudit convoyeur, un transporteur intermédiaire du type dit sauterelle disposé entre la boucle du convoyeur et le transporteur de flèche, un bras solidaire du châssis mobile commandant le basculement dudit transporteur intermédiaire, et des moyens pour atteler le chariot au châssis mobile.

Il n'existe pas à proprement parler de structure de support de la boucle autre que le chariot lui-même, et le basculement du bras ne saurait avoir la moindre action sur le chariot. Par ailleurs, la présence de la sauterelle rend l'installation plus compliquée, sans que pour autant les opérations signalées en référence aux installations antérieures soient évitées. Tout changement de position nécessite en effet un déplacement du chariot par rapport au châssis mobile. Il est alors nécessaire de faire varier leur écartement au moyen d'un vérin hydraulique associé aux moyens d'attelage précités.

L'invention consiste essentiellement à commander le basculement de la structure de support de la boucle par un bras moteur solidaire du châssis mobile, de telle sorte que la force exercée par ledit bras présente une composante horizontale qui s'exerce sur le chariot et provoque automatiquement les déplacements relatifs de celui-ci par rapport au châssis mobile au cours du basculement.

L'invention a plus précisément pour objet une installation de mise en tas et de reprise de matériaux en vrac. Elle comprend un châssis mobile le long d'une voie, ledit châssis supportant une flèche équipée d'un transporteur à bande réversible, un chariot mobile le long d'un convoyeur à bande réversible disposé suivant la voie du châssis mobile afin de déplacer sur ladite voie une boucle de la bande dudit convoyeur, une structure de support de la boucle, ladite structure étant articulée au chariot à l'une de ses extrémités, au moins un bras articulé à l'une de ses extrémités au châssis mobile et à l'autre extrémité à la structure de support de la boucle en vue de faire basculer ladite structure de support et de faire passer l'extrémité de la boucle de la position de mise en tas à la position de reprise et vice versa, des moyens d'entraînement exerçant un couple sur le bras de telle sorte que ce dernier commande, par l'intermédiaire de la structure de support de la boucle, les déplacements relatifs du chariot par rapport au châssis, et des moyens de verrouillage desdits moyens d'entraînement en chaque position de service, lesdits moyens de verrouillage constituant, avec le bras, une liaison entre le châssis et le chariot.

Les moyens d'entraînement du bras sont solidaires du châssis mobile.

Suivant une première forme de l'invention, les moyens d'entraînement du bras actionnent l'extrémité dudit bras qui est articulée à la structure de support de la boucle du convoyeur.

Lesdits moyens d'entraînement du bras comprennent un premier vérin dont le cylindre est articulé sur le châssis mobile et dont la tige est articulée à l'une des extrémités d'un levier dont l'autre extrémité est montée folle autour de l'axe d'articulation du bras au châssis mobile, et un deuxième vérin dont le cylindre est articulé à la même extrémité du levier que la tige du premier vérin et dont la tige est articulée au bras.

D'une manière avantageuse, la tige du deuxième vérin est articulée au bras, au voisinage de l'axe d'articulation dudit bras à la structure de support de la boucle, voire autour dudit axe d'articulation.

Suivant une deuxième forme de l'invention, les moyens d'entraînement du bras actionnent l'extrémité dudit bras qui est articulée au châssis mobile.

Lesdits moyens d'entraînement du bras comprennent un moteur apte à faire tourner le bras, en commandant la rotation autour de l'axe d'articulation du bras d'un arbre solidaire dudit bras.

Le moteur est, de préférence, un vérin rotatif.

Quelle que soit la forme de l'invention, les moyens de verrouillage sont constitués par des systèmes, connus en soi, permettant d'assurer le blocage hydraulique des vérins.

Il est en outre prévu au moins un moyen de verrouillage supplémentaire de sécurité.

Chaque moyen de verrouillage supplémentaire est constitué par un dispositif à marteau dont la tête traverse, en position de verrouillage, un évidement de forme complémentaire pratiqué dans l'extrémité coopérante du bras ou de la structure de support de la boucle, ladite tête de marteau étant ensuite tournée de 90° sous l'action d'un vérin entraînant en rotation la tige du marteau par l'intermédiaire d'un levier.

L'invention sera mieux comprise en se référant à la description qui suit, faite en regard des dessins annexés, concernant une forme particulière de réalisation donnée à titre d'exemple non limitatif.

La fig. 1 est une vue en élévation de l'installation au cours d'une opération de mise en tas.

La fig. 2 est une vue analogue à la précédente au cours d'une opération de reprise.

La fig. 3 est une vue partielle à plus grande échelle de la fig. 1.

La fig. 4 est une vue partielle à plus grande échelle de la fig. 2.

La fig. 5 est une vue en perspective d'un moyen de verrouillage supplémentaire.

La fig. 6 représente ledit moyen en vue de dessus.

Sur les figures, le repère 1 désigne un châssis mobile le long d'une voie 2. Une flèche 3 est montée sur un support 4 pivotant autour d'un axe vertical 5 du châssis 1. La flèche 3 est par ailleurs inclinable autour d'un axe horizontal 6 du support 4. Un organe de reprise, tel que la roue-pelle 7, est monté sur l'extrémité libre de la flèche 3. Cette dernière porte en outre un transporteur 8 à bande réversible.

Le repère 9 désigne un chariot mobile le long d'un convoyeur à bande réversible 10 disposé suivant la voie 2. Le chariot 9 se déplace sur ladite voie en même temps qu'une boucle 11 de la bande 10.

Le repère 12 désigne une structure de support de la boucle 11. Ladite structure est articulée en 13 au chariot 9.

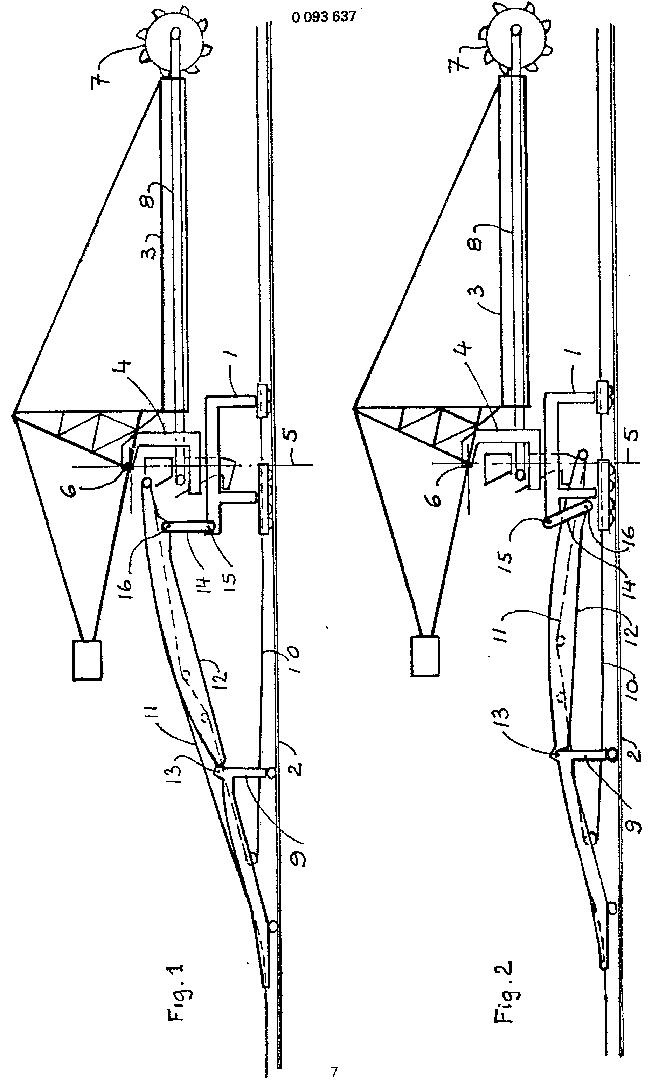

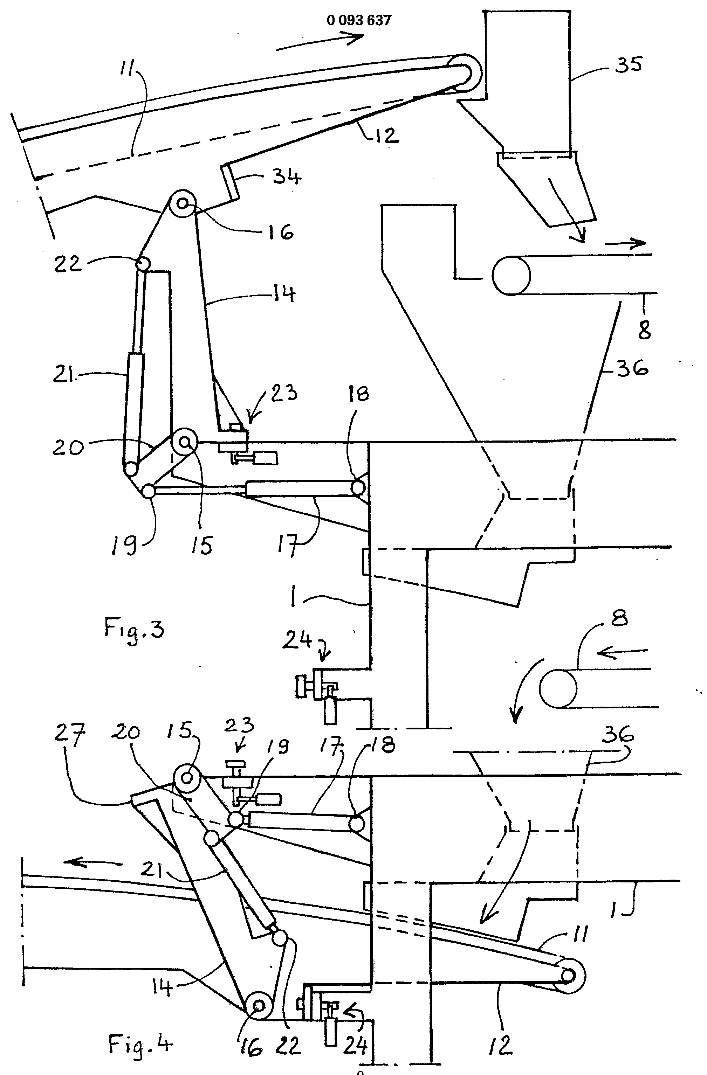

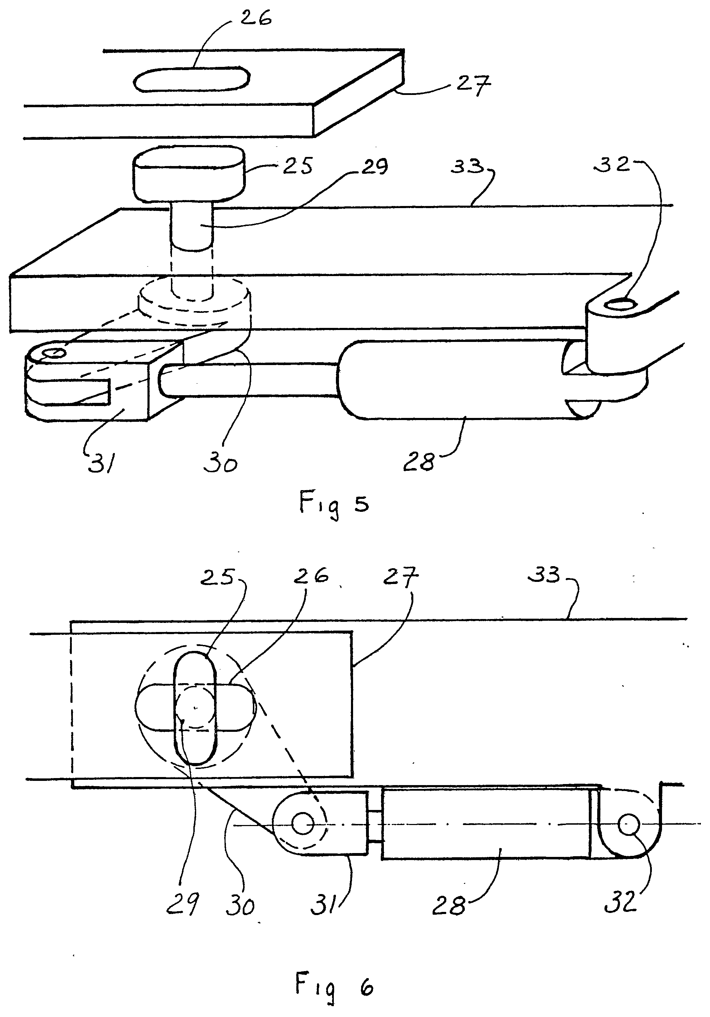

Un bras 14, dont il sera parlé plus explicitement ci-après, commande le basculement de la structure 12 afin de faire passer l'extrémité de la boucle 11 de la position de mise en tas, représentée sur les fig. 1 et 3, à la position de reprise, représentée sur les fig. 2 et 4 et vice versa, positions pour lesquelles les sens de circulation du transporteur 8 et de la bande 10 sont inversés.

Le bras 14 est articulé en 15 à l'une de ses extrémités sur le châssis 1. L'articulation 15 est matérialisée par un arbre solidaire du bras 14, ledit arbre étant monté pivotant dans des paliers solidaires du châssis 1. On pourrait, bien entendu, prévoir une disposition inverse suivant laquelle l'arbre, solidaire du châssis 1, serait monté dans des paliers solidaires du bras 14. La représentation adoptée, de forme schématique, ne préjuge pas de la disposition choisie. L'extrémité du bras 14 opposée à l'articulation 15 est articulée en 16 sur la structure 12 dans des conditions analogues.

Le bras 14 possède des moyens d'entraînement et des moyens de verrouillage en position de service qui vont être maintenant décrits.

Les moyens d'entraînement comportent un premier vérin 17 dont le cylindre est articulé en 18 au châssis 1 et dont la tige est articulée en 19 à l'une des extrémités d'un levier 20 dont l'autre extrémité est montée folle autour de l'axe de l'articulation 15, et un deuxième vérin 21 dont le cylindre est articulé à la même extrémité du levier 20 que la tige du vérin 17 et dont la tige est articulée au bras 14 en 22.

Le verrouillage du bras 14 en position de service est assuré par des systèmes, connus en soi, permettant d'assurer le blocage hydraulique des vérins 17 et 21.

Les repères 23 et 24 désignent globalement des moyens de verrouillage supplémentaires de sécurité, prévus respectivement pour les positions de mise en tas et de reprise. Ces moyens supplémentaires étant analogues, on décrira seulement ci-après le moyen 23 représenté en détail sur les fig. 5 et 6.

Ce moyen comprend un dispositif à marteau dont la tête 25 traverse, en position de verrouillage, un évidement 26 de forme complémentaire pratiqué à travers un talon 27 constitué par un appendice de l'extrémité coopérante du bras 14. La tête 25 est ensuite tournée de 90° sous l'action d'un vérin 28 entraînant en rotation la tige 29 du marteau par l'intermédiaire d'un levier 30 auquel est articulé un étrier 31 solidaire de la tige du vérin 28. Ce dernier est articulé en 32 à une plaque 33 solidaire du châssis 1 et parallèle au talon 27, ce qui autorise un certain déplacement angulaire. Par ailleurs, la plaque 33 traversée par la tige 29 forme un guidage pour celle-ci.

Dans le cas du moyen 24, le talon 34, analogue au talon 27, est solidaire de la structure 12.

Grâce aux vérins 17 et 21 accouplés par l'intermédiaire du levier 20, le bras 14 est soumis à un couple et il constitue un moyen moteur pour commander le basculement de la structure 12, d'une part, et les déplacements relatifs du chariot 9 par rapport au châssis 1, d'autre part, comme cela ressort du fonctionnement de l'installation que l'on va maintenant exposer.

On admet que la position initiale est la position de mise en tas suivant les fig. 1 et 3. Le chariot 9 fonctionne en chariot verseur, l'extrémité de la boucle 11 de la bande transporteuse 10 formant tête de déversement. Les matériaux en vrac amenés par la bande 10 sont déversés dans une trémie 35 reliée au support 4, ladite trémie les déversant à son tour sur la bande du transporteur de flèche 8 formant jeteur.

Pour passer de la position que l'on vient de décrire à la position de reprise, il est nécessaire de mettre à l'arrêt le convoyeur à bande 10 et le transporteur de flèche 8, puis de déverrouiller le bras 14. Ce dernier devenu libre peut tourner autour de l'axe de l'articulation 15 pour venir occuper la position de reprise suivant les fig. 2 et 4. Au cours de sa rotation, le bras 14 articulé en 16 à la structure 12 exerce sur cette dernière une force dont la composante horizontale s'exerce sur le chariot 9 provoquant d'abord le recul de celui-ci par rapport au châssis 1, puis le rapprochement dudit chariot dudit châssis. Ce mouvement de basculement du bras 14 ne nécessite pas nécessairement la mise en action des vérins si la force de la pesanteur est suffisante. L'installation étant en position de reprise, dans cette dernière position on procède au verrouillage du bras 14, puis on remet en service, en sens inverse de la position précédente, le convoyeur à bande 10 et le transporteur de flèche 8. La bande du transporteur 8, alimenté par la roue-pelle 7, déverse les matériaux dans une trémie 36, qui les déverse à son tour sur la boucle 11, inclinée vers le bas du convoyeur à bande 10.

Le retour dans la position de départ est assuré en sens inverse sous l'action des seuls vérins 17 et 21.

Quel que soit le sens de basculement du bras 14 commandant soit la descente, soit la remontée de la structure 12, le recul de cette dernière avec le chariot 9 au cours de la première phase du mouvement permet à la boucle 11 d'éviter tout obstacle, tel que le châssis 1 et les trémies 35 et 36 en contournant lesdits obstacles, tandis que la deuxième phase du mouvement assure le retour du chariot 9 à sa position de départ par rapport au châssis 1.

Dans la description qui précède, il est constamment fait référence à un bras 14 unique. En pratique, l'installation comporte avantageusement deux bras tels que 14, disposés de part et d'autre du châssis 1 à l'extérieur par rapport à ce dernier. Il va de soi qu'à chaque bras est associé un moyen d'entraînement et un moyen de verrouillage particuliers. Ces moyens ainsi que les bras associés sont disposés symétriquement par rapport au plan vertical médian du châssis 1 parallèle à la direction de la voie 2.

Au lieu d'actionner l'extrémité du bras 14 qui est articulé à la structure 12, les moyens d'entraînement du bras pourraient actionner l'extrémité du bras 14 qui est articulée au châssis 1, ou même les deux extrémités à la fois.

Au lieu d'être solidaires du châssis mobile 1, les moyens d'entraînement pourraient être solidaires de la structure du support 12 de la boucle 11.

Chaque moyen d'entraînement pourrait être constitué par un vérin rotatif, à la place de chaque paire de vérins 17-21. Les moyens de verrouillage de sécurité pourraient également être remplacés par d'autres moyens usuels.

D'une manière générale, on peut remplacer l'un quelconque des moyens décrits par un moyen techniquement équivalent.

**Revendications**

1. Installation de mise en tas et de reprise de matériaux en vrac, comprenant un châssis (1) mobile le long d'une voie (2), ledit châssis supportant une flèche (3) équipée d'un transporteur à bande réversible (8), un chariot (9) mobile le long d'un convoyeur à bande réversible (10) disposé suivant la voie (2) du châssis mobile (1) afin de déplacer sur ladite voie une boucle (11) de la bande dudit convoyeur, une structure de support (12) de la boucle (11), ladite structure étant articulée au chariot (9) à l'une de ses extrémités, au moins un bras (14) articulé à l'une de ses extrémités au châssis mobile (1) et à l'autre extrémité à la structure de support (12) de la boucle (11) en vue de faire basculer ladite structure de support et de faire passer l'extrémité de la boucle (11) de la position de mise en tas à la position de reprise et vice versa, des moyens d'entraînement (17, 20, 21) exerçant un couple sur le bras (14) de telle sorte que ce dernier commande, par l'intermédiaire de la structure de support (12) de la boucle (11), les déplacements relatifs du chariot (9) par rapport au châssis (1), et des moyens de verrouillage desdits moyens d'entraînement en chaque position de service, lesdits moyens de verrouillage constituant, avec le bras (14), une liaison entre le châssis (1) et le chariot (9).

2. Installation suivant la revendication 1, caractérisée en ce que les moyens d'entraînement (17, 20, 21) du bras (14) sont solidaires du châssis mobile (1).

3. Installation suivant l'une des revendications 1 ou 2, caractérisée en ce que les moyens d'entraînement (17, 20, 21) actionnent l'extrémité du bras (14) qui est articulée à la structure de support (12) de la boucle (11) du convoyeur (10).

4. Installation suivant l'une des revendications 1 ou 2, caractérisée en ce que les moyens d'entraînement (17, 20, 21) actionnent l'extrémité du bras (14) qui est articulée au châssis mobile (1).

5. Installation suivant la revendication 3, caractérisée en ce que les moyens d'entraînement du bras (14) comprennent un premier vérin (17) dont le cylindre est articulé sur le châssis mobile (1) et dont la tige est articulée à l'une des extrémités d'un levier (20) dont l'autre extrémité est montée folle autour de l'axe d'articulation du bras (14) au châssis mobile (1), et un deuxième vérin (21) dont le cylindre est articulé à la même extrémité du levier (20) que la tige du premier vérin (17) et dont la tige est articulée au bras (14).

6. Installation suivant la revendication 5, caractérisée en ce que la tige du deuxième vérin (21) est articulée au bras (14) au voisinage de l'axe d'articulation dudit bras à la structure de support (12) de la boucle (11).

7. Installation suivant la revendication 4, caractérisée en ce que les moyens d'entraînement com-

## 0 093 637

prennent un moteur apte à faire tourner le bras (14) en commandant la rotation, autour de l'axe d'articulation du bras, d'un arbre solidaire dudit bras.

8. Installation suivant la revendication 7, caractérisée en ce que le moteur est un vérin rotatif.

9. Installation suivant l'une des revendications 5 ou 8, caractérisée en ce que les moyens de verrouillage sont constitués par des systèmes, connus en soi, permettant d'assurer le blocage hydraulique des vérins.

10. Installation suivant la revendication 9, caractérisée en ce qu'il est prévu au moins un moyen de verrouillage supplémentaire (23, 24).

11. Installation suivant la revendication 10, caractérisée en ce que chaque moyen de verrouillage supplémentaire est constitué par un dispositif à marteau dont la tête (25) traverse, en position de verrouillage, un évidement (26) de forme complémentaire pratiqué dans l'extrémité coopérante du bras (14) ou de la structure de support (12) de la boucle (11), ladite tête de marteau étant ensuite tournée de 90° sous l'action d'un vérin (28) entraînant en rotation la tige (29) du marteau par l'intermédiaire d'un levier (30).

## Patentansprüche

1. Vorrichtung zum Auf- und Abbauen von Schüttguthalden, bestehend aus einem längs einer Bahn (2) fahrbaren Gestell (1), das einen mit einem reversiblen Förderband (8) ausgerüsteten Ausleger (3) trägt, einem längs eines reversiblen Bandförderers (10), der in Richtung der Bahn (2) des fahrbaren Gestells (1) angeordnet ist, verfahrbaren Wagen (9), um auf dieser Bahn eine Schleife (11) des Bandes des Förderers (10) zu verschieben, einem Tragwerk (12) der Bandschleife (11), wobei dieses Werk an einem Ende am Wagen (9) gelenkig montiert ist, mindestens einem an einem Ende am fahrbaren Gestell (1) und am anderen Ende am Tragwerk (12) der Bandschleife (12) gelenkig montierten Arm (14), um das Tragwerk kippen zu lassen und das Ende der Bandschleife (11) von der Stellung des haldenaufbaues in die Stellung des -abbauens und umgekehrt übergehen zu lassen, Antriebsmitteln (17, 20, 21), die ein Moment auf den Arm (14) ausüben, so dass dieser über das Tragwerk (12) der Bandschleife (11) die relativen Bewegungen des Wagens (9) gegenüber dem Gestell (1) steuert, und aus Mitteln zu Verriegelung der Antriebsmittel in jeder Betriebsstellung, wobei die Verriegelungsmittel, mit dem Arm (14) eine Verbindung zwischen dem Gestell (1) und dem Wagen (9) herstellen.

2. Vorrichtung nach Anspruch 1, dadurch gekennzeichnet, dass die Antriebsmittel (17, 20, 21) des Arms (14) mit dem fahrbaren Gestell (1) verbunden sind.

3. Vorrichtung nach einem der Ansprüche 1 oder 2, dadurch gekennzeichnet, dass die Antriebsmittel (17, 20, 21) das Ende des Arms (14) betätigen, das am Tragwerk (12) der Bandschleife (11) des Bandförderers (10) gelenkig montiert ist.

4. Vorrichtung nach einem der Ansprüche 1 oder 2, dadurch gekennzeichnet, dass die Antriebsmittel (17, 20, 21) das Ende des Arms (14) betätigen, das am fahrbaren Gestell gelenkig montiert ist.

5. Vorrichtung nach Anspruch 3, dadurch gekennzeichnet, dass die Antriebsmittel des Arms (14) aus einem ersten Arbeitszylinder (17), dessen Zylindermantel am fahrbaren Gestell (1) gelenkig montiert ist und dessen Stange an einem Ende eines Hebels (20) gelenkig montiert ist, dessen anderes Ende um die Gelenkachse des Arms (14) am fahrbaren Gestell (1) lose montiert ist, und aus einem zweiten Arbeitszylinder (21), dessen Zylindermantel am gleichen Ende des Hebels (20) gelenkig montiert ist wie die Stange des ersten Arbeitszylinders (17) und dessen Stange am Arm (14) gelenkig montiert ist, bestehen.

6. Vorrichtung nach Anspruch 5, dadurch gekennzeichnet, dass die Stange des zweiten Arbeitszylinders (21) am Arm (14) in der Nähe der Gelenkachse gelenkig montiert ist, die diesen Arm mit dem Tragwerk (12) der Bandschleife (11) verbindet.

7. Vorrichtung nach Anspruch 4, dadurch gekennzeichnet, dass die Antriebsmittel aus einem Motor bestehen, der den Arm (14) drehen lässt, indem er um die Gelenkachse des Arms eine mit diesem Arm verbunden Welle drehantreibt.

8. Vorrichtung nach Anspruch 7, dadurch gekennzeichnet, dass der Motor ein drehender Arbeitszylinder ist.

9. Vorrichtung nach einem der Ansprüche 5 oder 8, dadurch gekennzeichnet, dass die Verriegelungsmittel aus an sich bekannten Systemen bestehen, die die hydraulische Verriegelung der Arbeitsylinder bewirken.

10. Vorrichtung nach Anspruch 9, dadurch gekennzeichnet, dass mindestens ein weiteres Verriegelungsmittel (23, 24) vorgesehen ist.

11. Vorrichtung nach Anspruch 10, dadurch gekennzeichnet, dass jedes weitere Verriegelungsmittel aus einer hammerförmigen Vorrichtung besteht, deren Kopf (25) in der Verriegelungstellung durch eine in dem arbeitenden Ende des Arms (14) oder des Tragwerkes (12) der Bandschleife (11) angeordnete Aussparung (26) entsprechender Form geht, wobei der Hammerkopf dann um 90° gedreht wird, unter der Wirkung eines Arbeitszylinders (28), der über einen Hebel (30) den Stiel (29) des Hammers drehantreibt.

## Claims

1. Apparatus for piling and unpiling bulk materials comprising a frame (1) movable along a track (2), the said frame supporting a boom (3) equipped with a two-way belt conveyor (8), a carriage (9) movable along another two-way belt conveyor (10) positioned along the track (2) of the mobile frame (1) so as to move along the said track a loop (11) of the belt of the said another conveyor, a support structure (12) of the loop (11), the said structure being hinged to the carriage (9) at one of its ends, at least one arm (14) hinged at one of its ends to the mobile frame (1) and at the other end to the support structure (12) of the loop (11) so as to swing the said support structure and switch the end of the loop (11) from its piling to its reclaiming position and vice versa, driving means (17, 20, 21) exerting a torque on the arm (14) in such a way that the latter controls, through the support structure (12) of the loop (11), the relative displacements of the carriage (9) with respect to the frame (1), and means for locking the said driving means for each operational position, the said locking means constituting, with the arm (14), a connection between the frame (1) and the carriage (9).

2. Apparatus according to Claim 1, characterized by the fact that the driving means (17, 20, 21) of the arm (14) are integral with the mobile frame (1).

3. Apparatus according to Claim 1 or 2, characterized by the fact that the driving means (17, 20, 21) actuate the end of the arm (14) which is hinged to the support structure (12) of the loop (11) of the conveyor (10).

4. Apparatus according to Claim 1 or 2, characterized by the fact that the driving means (17, 20, 21) actuate the end of the arm (14) which is hinged to the mobile frame (1).

5. Apparatus according to Claim 3, characterized by the fact that the driving means of the arm (14) comprise a first jack (17) the cylinder of which is hinged to the mobile frame (1) and the rod of which is hinged to one end of a lever (20) the other end of which is loosely mounted on the hinge pin connecting the arm (14) to the mobile frame (1), and a second jack (21) the cylinder of which is hinged to the same end of the lever (20) as the rod of the first jack (17) and the rod of which is hinged to the arm (14).

6. Apparatus according to Claim 5, characterized by the fact that the rod of the second jack (21) is hinged to the arm (14) close to the hinge pin connecting the said arm to the support structure (12) of the loop (11).

7. Apparatus according to Claim 4, characterized by the fact that the driving means include a motor capable of rotating the arm (14) by controlling the rotation, around the pivoting axis of the arm, of a shaft integral with the said arm.

8. Apparatus according to Claim 7, characterized by the fact that the motor is a rotary jack.

9. Apparatus according to Claim 5 or 8, characterized by the fact that the locking means consist of known per se systems which make it possible to ensure the hydraulic locking of the jacks.

10. Apparatus according to Claim 9, characterized by the fact that provision has been made for at least one additional locking means (23, 24).

11. Apparatus according to Claim 10, characterized by the fact that each additional locking means consists of a hammer device the head (25) of which crosses, in the locking position, a complementary-shaped recess provided in the cooperating end of the arm (14) or of the support structure (12) of the loop (11), the sais hammer head then being rotated by 90° under the action of a jack (28) which rotates the hammer rod (29) through a lever (30).

Fig.1

Fig.2

0 093 637

Fig.3

Fig.4

26

27

25  29  33  32

31  30  28

Fig 5

25  26  27  33

29  30  31  28  32

Fig 6